(19) Europäisches Patentamt
European Patent Office
Office européen des brevets

(11) **EP 1 229 039 B1**

(12) **EUROPÄISCHE PATENTSCHRIFT**

(45) Veröffentlichungstag und Bekanntmachung des Hinweises auf die Patenterteilung:
**02.01.2004 Patentblatt 2004/01**

(51) Int Cl.$^7$: **C07F 7/08**, C07F 7/14

(21) Anmeldenummer: **02000682.1**

(22) Anmeldetag: **11.01.2002**

(54) **Verfahren zur Herstellung von in 3-Stellung funktionalisierten Propylsilanen**

Process for the preparation of in 3-position functionalised propylsilanes

Procédé de préparation des propylsilanes substitué en position 3

(84) Benannte Vertragsstaaten:
**AT BE CH CY DE DK ES FI FR GB GR IE IT LI LU MC NL PT SE TR**

(30) Priorität: **03.02.2001 DE 10104966**

(43) Veröffentlichungstag der Anmeldung:
**07.08.2002 Patentblatt 2002/32**

(73) Patentinhaber: **Degussa AG**
**40474 Düsseldorf (DE)**

(72) Erfinder:
• **Batz-Sohn, Christoph, Dr.**
**63454 Hanau-Mittelbuchen (DE)**
• **Panster, Peter, Dr.**
**63517 Rodenbach (DE)**
• **Michel, Rudolf**
**63579 Freigericht (DE)**
• **Albert, Michael, Dr.**
**67433 Neustadt (DE)**
• **Vryens, Ivo, Dr.**
**2900 Schoten (BE)**

(56) Entgegenhaltungen:
**EP-A- 0 152 803          EP-A- 0 963 993**
**US-A- 4 292 433**

• **DATABASE WPI Section Ch, Week 198103 Derwent Publications Ltd., London, GB; Class E11, AN 1981-03066D XP002197301 & JP 55 145693 A (CHISSO CORP), 13. November 1980 (1980-11-13)**

## Beschreibung

Die Erfindung betrifft ein Verfahren zur Herstellung von 3-funktionalisierten Propylsilanen.

Es ist bekannt, daß Hydrogensilane sich mit zum Beispiel Allylchlorid in Gegenwart von homogenen oder heterogenen Platin-Katalysatoren zu 3-Chlorpropylsilanen umsetzen lassen. Diese Reaktion wird allgemein als Hydrosilylierung bezeichnet (siehe beispielsweise Gleichung I).

$$Cl\text{-}CH_2\text{-}CH=CH_2 + HSiCl_3 \rightarrow Cl\text{-}CH_2\text{-}CH_2\text{-}CH_2\text{-}SiCl_3 \qquad (I)$$

Von homogener Hydrosilylierung spricht man, wenn als Katalysatoren lösliche Platinverbindungen, im einfachsten Falle zum Beispiel $H_2PtCl_6$ x 6 $H_2O$ eingesetzt werden (vgl. DE-OS 28 51 456, CS-PS 176 910, US-PS 4,292,433, US-PS 4,292,434, DE-AS 11 87 240, DE-PS 11 65 028). Bei heterogenen Hydrosilylierungen werden elementares Platin oder Platinverbindungen auf einem Träger verwendet (vgl. US-PS 2,637,738, DE-PS 20 12 229, DE-PS 28 15 316).

Es ist weiterhin bekannt, daß bei der Umsetzung von zum Beispiel Allylchlorid mit Hydrogensilanen zu 3-Chlorpropylsilanen ein Teil des eingesetzten Allylchlorids mit dem Hydrogensilan in einer Nebenreaktion unter Bildung von Propen und des dem jeweiligen Hydrogensilan entsprechenden Chlorsilans reagiert (siehe beispielsweise Gleichung II).

$$Cl\text{-}CH_2\text{-}CH=CH_2 + HSiCl_3 \rightarrow CH_3\text{-}CH=CH_2 + SiCl_4 \qquad (II)$$

So werden zum Beispiel bei der Umsetzung von Allylchlorid mit Trichlorsilan 25 - 30 Mol-% des zur Reaktion gelangenden Allylchlorids durch diese Nebenreaktion in Propen umgewandelt. Dabei entsteht eine äquivalente Menge an Siliciumtetrachlorid.

Das Molverhältnis von entstandenem Chlorpropylsilan zu Siliciumtetrachlorid ist ein Maß für die Selektivität der Reaktion und erreicht typischerweise Werte zwischen 2,33 : 1 (70 % Ausbeute, bezogen auf Allylchlorid) und 3 : 1 (75 % Ausbeute).

Es ist weiterhin bekannt, daß durch spezielle Reaktionsführung in Druckapparaturen die Propenbildung gemindert werden kann. Diese Arbeitsweise hat zur Folge, daß das Propen quantitativ mit dem Hydrogensilan zu Propylsilanen weiterreagiert. Auch bei den unter Normaldruck in der üblichen Art durchgeführten Reaktionen setzt sich in beträchtlichem Umfang das aus der Nebenreaktion stammende Propen in einer weiteren Nebenreaktion mit Hydrogensilan zu den entsprechenden Propylsilanen um (vgl. auch DE 34 04 703 C) (siehe beispielsweise Gleichung 3).

$$CH_3\text{-}CH=CH_2 + HSiCl_3 \rightarrow CH_3\text{-}CH_2\text{-}CH_2\text{-}SiCl_3 \qquad (III)$$

So werden zum Beispiel in einer technischen Anlage bei einer heterogen-katalytischen Umsetzung von Allylchlorid und Trichlorsilan in einer mit platinierter Aktivkohle gefüllten Säure pro 1000 kg 3-Chlorpropyltrichlorsilan bis zu 230 kg Propyltrichlorsilan erhalten. Das bedeutet einen Mehrbedarf von ca. 28 % an Trichlorsilan, bezogen auf die ins Zielprodukt eingegangene Trichlorsilan-Menge (vgl. auch DE 41 19 994 A1).

Die bekannten Verfahren haben den Nachteil, daß zum einen ein zusätzlicher Bedarf an Hydrogensilan besteht, und zum anderen die unerwünschten Propylsilane schwierig abzutrennen sind. Hinzu kommt, daß es für diese Verbindungen kaum Einsatzgebiete gibt, wodurch diese kostenintensiv entsorgt werden müssen.

Es besteht somit die Aufgabe, ein Verfahren zur Herstellung von in 3-Stellung funktionalisierten Propylsilanen zu finden, daß diese Nachteile nicht aufweist.

Gegenstand der Erfindung ist ein Verfahren zur Herstellung von 3-funktionalisierten Propylsilanen durch Addition von Allylverbindungen der allgemeinen Formel I

$$H_2C=CH\text{-}CH_2X \qquad (I),$$

wobei X = Cl, Br, I, F, CN, SCN, SH, SR, OH, $NRR^1$ und OR sein kann und R und $R^1$, beide unabhängig voneinander, $(C_1 - C_6)$Alkyl oder $(C_3 - C_7)$Alkyl bedeuten, an Silane der Formel II

$$R^2R^3R^4SiH \qquad (II),$$

wobei $R^2$, $R^3$, $R^4$, alle unabhängig voneinander, Wasserstoff, Halogen, $(C_1 - C_6)$ Alkyl, $(C_1 - C_6)$Haloalkyl, $(C_3 - C_6)$ Allyl, $(C_1 - C_4)$Alkoxy, Phenyl, Aryl oder Aralkyl bedeuten können, bei Reaktionstemperaturen zwischen 0 °C und 200 °C und Drücken zwischen 800 mbar und 25 bar und in Gegenwart eines Platinkatalysators, dadurch gekennzeichnet, daß man das eingesetzte Silan (II) in 15- bis 100-fachem molaren Überschuß, bezogen auf die Propenverbindung (I), mit dem Katalysator in Kontakt bringt.

Überraschenderweise wird gefunden, daß die Nebenproduktbildung unterdrückt wird, wenn am Katalysator große Überschüsse an Hydrogensilan vorliegen. Dabei steigt beispielsweise bei der Reaktion von Allylchlorid mit Trichlorsilan die erzielte Selektivität von üblicherweise 74 % C1-PTS-Ausbeute, bezogen auf Allylchlorid, auf bis zu 85 %. Dabei sinkt die Menge des gebildeten Nebenproduktes Propyltrichlorsilan um 50 %, und der Bedarf der Edukte Trichlorsilan um 20 % beziehungsweise Allylchlorid um 12 %.

Bevorzugt kann für X ein Halogen, insbesondere Chlor, stehen.

Verfahrensweise ist bei Normaldruck, Über- und Unterdruck möglich. Bevorzugt wird dabei bei Drücken zwischen 800 mbar und 10 bar gearbeitet. Insbesondere eignet sich ein Druck von 800 mbar bis 6 bar.

Die Durchführung der erfindungsgemäßen Verfahrensweise erfolgt zweckmäßigerweise derart, daß man die Allylverbindung und das in großem stöchiometrischen Überschuß eingesetzte Hydrogensilan in einem geeigneten Gefäß gemeinsam mit dem Katalysator solange bei Temperaturen zwischen 0 °C und 300 °C, bevorzugt zwischen 25 °C und 200 °C, zur Reaktion bringt, bis alles der Allylverbindung umgesetzt ist.

Dabei lassen sich die erfindungsgemäßen großen stöchiometrischen Überschüsse an Silanen des Typs (II) bei Kontakt mit dem Platinkatalysator technisch auf unterschiedliche Weise realisieren.

Zum einen kann der Überschuß an Komponente II am Katalysator direkt durch Mischen der Komponenten I und II eingestellt werden.

Zum anderen können in einem geeigneten Reaktionsgefäß die beiden Komponenten der Additionsreaktion mit dem Katalysator in Kontakt und damit zur Reaktion gebracht werden, wobei jedes beliebige Verhältnis der Komponenten eingestellt werden kann, also auch die erfindungsgemäßen großen Überschüsse der Silankomponente. Dabei kann das Reaktionsgefäß ein diskontinuierlich betriebener Rührkessel als auch ein kontinuierlich betriebener mit Katalysator gefüllter Rohrreaktor sein.

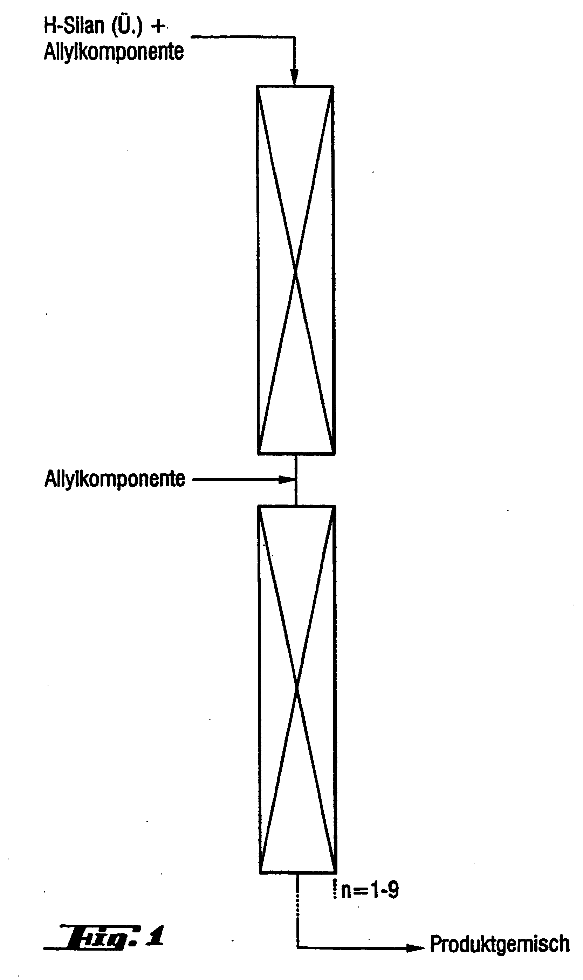

Zum anderen kann der Überschuß an Komponente (II) am Katalysator dadurch erreicht werden, daß man eine Kaskade von mindestens zwei, vorzugsweise von zwei bis zu zehn, Rohrreaktoren verwendet, wobei man die Komponente (I) jeweils zwischen den Reaktoren in anteiligen Mengen nachdosiert und im jeweils nachfolgenden Reaktor abreagiert. Diese Ausführungsform der Erfindung ist in der Figur 1 schematisch dargestellt.

Gemäß dieser Ausführungsform der Erfindung lassen sich bei kontinuierlich betriebenen mit Katalysator gefüllten Rohrreaktoren die erfindungsgemäßen Überschüsse an der Silankomponente auch dadurch erreichen, daß mindestens zwei, vorzugsweise zwei bis zu zehn, gleichartige Rohrreaktoren derart hintereinandergeschaltet werden, daß der erste Reaktor mit einem Gemisch gespeist wird, welches einen sehr großen Überschuß der Silankomponente enthält, wobei die Allylkomponente auf diesem ersten Reaktor vollständig abreagiert. Das aus dem ersten Reaktor austretende Produktgemisch wird dann mit einem kleinen Teil der Allylkomponente gemischt, so daß wiederum ein großer Überschuß der Silankomponente erreicht wird; mit dem so gebildeten neuen Gemisch wird der zweite Reaktor gespeist. Dieses Verfahren kann für alle hintereinandergeschalteten mit Katalysator gefüllten Rohrreaktoren angewandt werden, indem jweils zwischen den Reaktoren die Allylkomponente zudosiert wird. Somit ergibt sich auf dem Katalysator stets der erfindungsgemäße große Überschuß der Silankomponente.

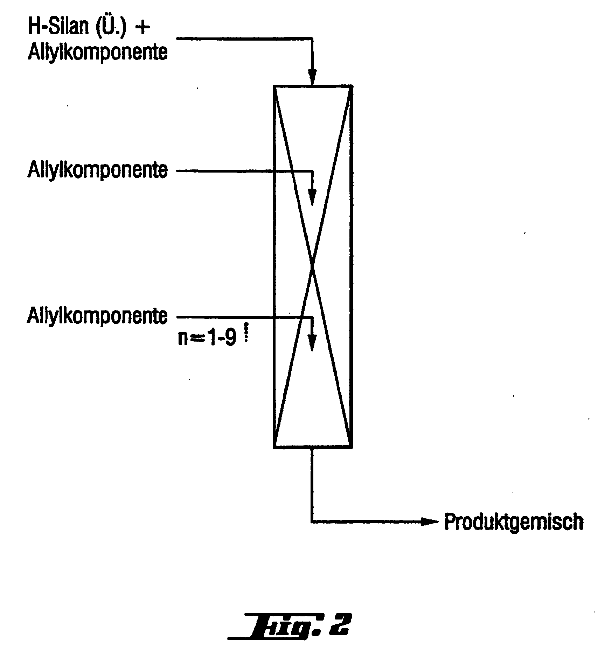

In einer weiteren Ausführungsform der Erfindung kann man die Kaskade durch einen einzigen Rohrreaktor ersetzen, wobei die Nachdosierung der Unterschußkomponente (I) durch mindestens eine, vorzugsweise eine bis zu neun, seitlich am Reaktor angebracht Rohrleitungen erfolgt. Diese Ausführungsform der Erfindung wird in der Figur 2 schematisch dargestellt. Dementsprechend kann man im Verlauf eines einzigen Rohrreaktors eine bis zu neun zusätzliche Dosierstellen für die Allylkomponente benutzen, um jeweils einen entsprechend kleinen Anteil der Allylkomponente zuzuführen. Damit kann lokal am Katalysator stets ein großer Silanüberschuß erzielt werden.

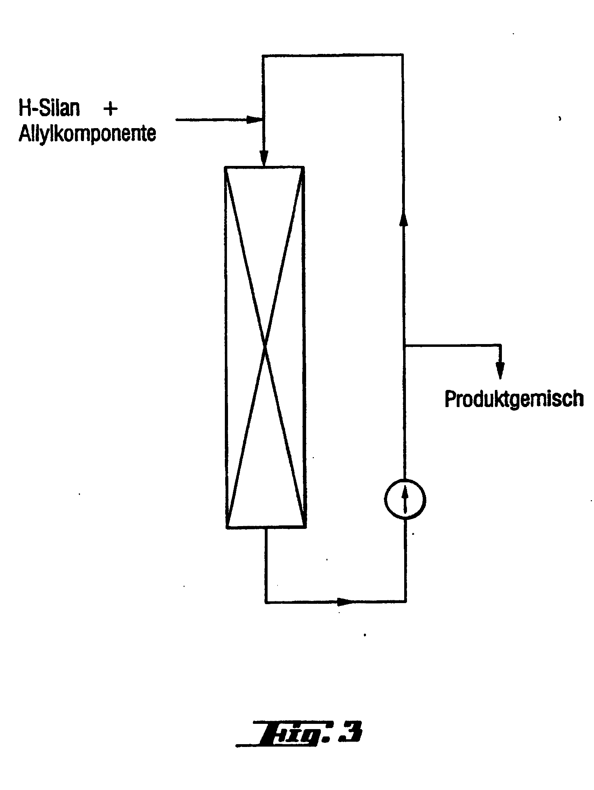

In einer weiteren Ausführungsform der Erfindung kann man den Silanüberschuß am Katalysator erhöhen, indem man den größten Teil des den Rohrreaktor passierenden Stoffstroms im Kreis zum Kopf des Reaktors zurückführt und aus dem Kreislauf nur diejenige Menge Produktgemisch entfernt, die auf der anderen Seite als Eduktgemisch dosiert wird. Dabei kann der im Eduktstrom eingestellte Überschuß der Silankomponente, bezogen auf die Allylkomponente, in Abhängigkeit zum eingestellten Verhältnis von Kreislaufmenge zur Eduktmenge vervielfacht werden, da die Allylkomponente im Verlauf des Rohrreaktors abreagiert. Diese Ausführungsform der Erfindung wird in der Figur 3 schematisch dargestellt.

Auf diese Weise kann man bei einem Silanüberschuß im Eduktstrom von 3 : 1 bei geeigneter Wahl der Parameter am Katalysator Silanüberschüsse, die größer als 15 : 1 sind, erzielen.

Die genannten erfindungsgemäßen Verfahrensweisen zur Erzielung hoher Überschüsse der Silankomponente beim Kontakt mit dem Katalysator können auch in Kombination angewandt werden.

Die als Ausgangskomponente erfindungsgemäß einsetzbaren Silane umfassen Silane des Strukturtyp II

$$R^2R^3R^4SiH \qquad\qquad (II),$$

wobei $R^2$, $R^3$ nd $R^4$, alle unabhängig voneinander, Wasserstoff, Halogen, $(C_1 - C_6)$Alkyl, $(C_1 - C_6)$Alkoxy, $(C_1 - C_6)$ Haloalkyl, $(C_3 - C_6)$Allyl, Phenyl, Aryl oder - Aralkyl sein können.

Bevorzugt können Silane, wie Trichlorsilan, oder gemischt substituierte Silane, wie zum Beispiel Methyl-, Ethyl-, Propylhydrogendichlorsilan oder Dimethylhydrogenchlorsilan, eingesetzt werden.

Der Platinkatalysator kann in jeder Oxidationstufe eingesetzt werden. Die Katalyse kann sowohl homogen oder heterogen erfolgen. Bei der heterogenen Katalyse kann die katalytisch aktive Platinverbindung auf einen Träger (vgl. US-PS 26 37 738, DE-PS 20 12 229, DE-PS 28 15 316) aufgezeogen sein.

Der Katalysator kann sowohl in stöchiometrischen als auch katalytischen Mengen, beispielsweise von 0,1 bis 10000 ppm, bevorzugt zwischen 10 und 500 ppm, bezogen auf die eingesetzte Allylverbindung, verwendet werden.

Bevorzugt kann ein heterogener Katalysator eingesetzt werden.

Unter der Angabe Selektivität wird dabei das Molverhältnis zwischen dem gewünschten Produkt 3-Chlorpropyltrichlorsilan (Cl-PTS) und Siliciumtetrachlorid verstanden.

Die erfindungsgemäßen Beispiele zeigen durch die erzielten Selektivitäten und Ausbeute an 3-Chlorpropyltrichlorsilan die Vorteilhaftigkeit des erfindungsgemäßen Verfahrens.

**Beispiel 1 (Vernleichsbeispiel)**

In einen beheizbaren Rohrreaktor mit 40 cm Länge und einem Volumen von 150 ml, der mit ca. 100 g platinierter, granulierter Aktivkohle (1 Gew.-% Platin) gefüllt ist, werden zunächst zum Benetzen des Katalysators 1 1 3-Chlorpropyltrichlorsilan dosiert. Danach werden bei ca. 90 °C und einem Druck von 2 bar pro Stunde 200 ml eines Gemisches aus Trichlorsilan und Allylchlorid (molares Verhältnis 1,43 : 1) dosiert. Nach 5 h Betrieb wird am Reaktorausgang eine Probe gezogen, abgekühlt und analysiert. Es ergibt sich folgende Produktzusammensetzung:

| | |
|---|---|
| 6,75 Gew.-% | Trichlorsilan (TCS) |
| - Gew.-% | Allylchlorid (ACl) |
| 19,31 Gew.-% | Siliciumtetrachlorid (STC) |
| 19,26 Gew.-% | Propyltrichlorsilan (PTS) |
| 54,68 Gew.-% | 3-Chlorpropyltrichlorsilan (Cl-PTS) |

Somit ergibt sich für die auf die Stoffmengen bezogene Selektivität der Reaktion ein Wert von 2,27 : 1. Dies entspricht einer Ausbeute von 3-Chlorpropyltrichlorsilan, bezogen auf Allylchlorid von 69,4 %.

**Beispiel 2**

Analog zu Beispiel 1 mit dem Unterschied, daß das molare Verhältnis von Trichlorsilan zu Allylchlorid 2,8 : 1 beträgt. Nach der Analyse ergibt sich folgende Produktzusammensetzung:

| | |
|---|---|
| 43,22 Gew.-% | Trichlorsilan (TCS) |
| - Gew.-% | Allylchlorid (ACl) |
| 9,69 Gew.-% | Siliciumtetrachlorid (STC) |
| 10,14 Gew.-% | Propyltrichlorsilan (PTS) |
| 39,96 Gew.-% | 3-Chlorpropyltrichlorsilan (Cl-PTS) |

Somit ergibt sich für die auf die Stoffmengen bezogene Selektivität der Reaktion ein Wert von 3,06 : 1. Dies entspricht einer Ausbeute von 3-Chlorpropyltrichlorsilan, bezogen auf Allylchlorid von 75,4 %.

**Beispiel 3**

Analog zu Beispiel 1 mit dem Unterschied, daß der größte Teil des am Reaktorende austretenden Produktgemisches durch eine Pumpe zum Reaktorkopf zurückgeführt wird. Dabei wird das Verhältnis des Kreislaufvolumens zum Eduktvolumen auf 13 : 1 eingestellt. Aus der Massenstrombilanz ergibt sich somit am Reaktorkopf ein molares Verhältnis von Trichlorsilan zu Allylchlorid 3 : 1. Bei dieser Fahrweise wird erst nach 97 h eine Probe des Produktgemisches gezogen und analysiert. Es ergibt sich folgende Produktzusammensetzung:

| 7,82 Gew.-% | Trichlorsilan (TCS) |
|---|---|
| 0,19 Gew.-% | Allylchlorid (ACl) |
| 15,67 Gew.-% | Siliciumtetrachlorid (STC) |
| 16,39 Gew.-% | Propyltrichlorsilan (PTS) |
| 59,13 Gew.-% | 3-Chlorpropyltrichlorsilan (Cl-PTS) |

Somit ergibt sich für die auf die Stoffmengen bezogene Selektivität der Reaktion ein Wert von 3,02 : 1. Dies entspricht einer Ausbeute von 3-Chlorpropyltrichlorsilan, bezogen auf Allylchlorid von 75,1 %.

**Beispiel 4**

Analog zu Beispiel 3 mit dem Unterschied, daß das molare Verhältnis der Edukte Trichlorsilan und Allylchlorid 2,8 : 1 beträgt. Aus der Massenstrombilanz ergibt sich somit am Reaktorkopf ein molares Verhältnis von Trichlorsilan zu Allylchlorid von 14 : 1. Es ergibt sich folgende Produktzusammensetzung:

| 42,41 Gew.-% | Trichlorsilan (TCS) |
|---|---|
| 0,68 Gew.-% | Allylchlorid (ACl) |
| 7,80 Gew.-% | Siliciumtetrachlorid (STC) |
| 7,52 Gew.-% | Propyltrichlorsilan (PTS) |
| 41,35 Gew.-% | 3-Chlorpropyltrichlorsilan (Cl-PTS) |

Somit ergibt sich für die auf die Stoffmengen bezogene Selektivität der Reaktion ein Wert von 4,25 : 1. Dies entspricht einer Ausbeute von 3-Chlorpropyltrichlorsilan, bezogen auf Allylchlorid von 81.0 %.

**Beispiel 5**

Analog zu Beispiel 3 mit dem Unterschied, daß das molare Verhältnis der Edukte Trichlorsilan und Allylchlorid 2,0 : 1 beträgt. Außerdem beträgt das Verhältnis des Kreislaufvolumens zum Eduktvolumen 30 : 1. Aus der Massenstrombilanz ergibt sich somit am Reaktorkopf ein molares Verhältnis von Trichlorsilan zu Allylchlorid von 25 : 1. Es ergibt sich folgende Produktzusammensetzung:

| 30,71 Gew.-% | Trichlorsilan (TCS) |
|---|---|
| 0,78 Gew.-% | Allylchlorid (ACl) |
| 7,51 Gew.-% | Siliciumtetrachlorid (STC) |
| 8,05 Gew.-% | Propyltrichlorsilan (PTS) |
| 52,96 Gew.-% | 3-Chlorpropyltrichlorsilan (Cl-PTS) |

Somit ergibt sich für die auf die Stoffmengen bezogene Selektivität der Reaktion ein Wert von 5,65 : 1. Dies entspricht einer Ausbeute von 3-Chlorpropyltrichlorsilan, bezogen auf Allylchlorid von 85 %.

**Beispiel 6**

Analog zu Beispiel 3 mit dem Unterschied, daß die Hälfte der dosierten Gesamtmenge des Allylchlorids auf der halben Reaktorhöhe zusätzlich in den Reaktor eingespeist wird. Die andere Hälfte wird wie in Beispiel 3 mit dem TCS zusammen am Reaktorkopf dosiert. Somit ergibt sich jeweils ein molarer TCS-Überschuß am Katalysator von ca. 14 : 1. Es ergibt sich folgende Zusammensetzung:

| | |
|---|---|
| 33,69 Gew.-% | Trichlorsilan (TCS) |
| 0,68 Gew.-% | Allylchlorid (ACl) |
| 10,36 Gew.-% | Siliciumtetrachlorid (STC) |
| 10,47 Gew.-% | Propyltrichlorsilan (PTS) |
| 44,80 Gew.-% | 3-Chlorpropyltrichlorsilan (Cl-PTS) |

Somit ergibt sich für die auf die Stoffmengen bezogene Selektivität der Reaktion ein Wert von 3,5 : 1. Dies entspricht einer Ausbeute von 3-Chlorpropyltrichlorsilan, bezogen auf Allylchlorid von 78 %.

**Beispiel 7**

Analog zu Beispiel 2 mit den Unterschieden, dass die Reaktion in zwei hintereinander geschalteten Reaktoren mit einem Volumen von je 1,7 1 durchgeführt wird und 250 ml des Gemisches zudosiert werden. Der molare TCS-Überschuss am Eintritt des ersten Reaktors beträgt somit ca. 2,8 : 1. Es ergibt sich folgende Produktzusammensetzung:

| | |
|---|---|
| 46,56 Gew.-% | Trichlorsilan (TCS) |
| 0,00 Gew.-% | Allylchlorid (ACl) |
| 8,92 Gew.-% | Siliciumtetrachlorid (STC) |
| 9,34 Gew.-% | Propyltrichlorsilan (PTS) |
| 35,18 Gew.-% | 3-Chlorpropyltrichlorsilan (Cl-PTS) |

Somit ergibt sich für die auf die Stoffmengen bezogene Selektivität der Reaktion ein Wert von 3,1 : 1. Dies entspricht einer Ausbeute von 3-Chlorpropyltrichlorsilan, bezogen auf Allylchlorid von 76 %.

**Beispiel 8**

Analog zu Beispiel 7 mit dem Unterschied, dass die Hälfte der dosierten Gesamtmenge des Allylchlorids erst vor dem zweiten Reaktor eingespeist wird. Die andere Hälfte wird wie in Beispiel 7 mit dem TCS zusammen dem ersten Reaktor zugeführt. Der molare TCS-Überschuss am Eintritt beträgt somit für den ersten Reaktor ca. 5,6 : 1 und für den zweiten Reaktor ca. 4,4 : 1. Es ergibt sich folgende Produktzusammensetzung:

| | |
|---|---|
| 47,55 Gew.-% | Trichlorsilan (TCS) |
| 0,00 Gew.-% | Allylchlorid (ACl) |
| 7,59 Gew.-% | Siliciumtetrachlorid (STC) |
| 8,03 Gew.-% | Propyltrichlorsilan (PTS) |
| 36,83 Gew.-% | 3-Chlorpropyltrichlorsilan (Cl-PTS) |

Somit ergibt sich für die auf die Stoffmengen bezogene Selektivität der Reaktion ein Wert von 3,6 : 1. Dies entspricht einer Ausbeute von 3-Chlorpropyltrichlorsilan, bezogen auf Allylchlorid von 78 %.

**Beispiel 9**

Analog zu Beispiel 8 mit dem Unterschied, dass die Reaktion in drei hintereinander geschalteten Reaktoren mit einem Volumen von je 1,7 1 durchgeführt wird. Je ein Drittel der dosierten Gesamtmenge des Allylchlorids wird erst vor dem zweiten und dem dritten Reaktor eingespeist, das andere Drittel wird mit dem TCS zusammen dem ersten Reaktor zugeführt. Der molare TCS-Überschuss am Eintritt beträgt somit für den ersten Reaktor ca. 8,4 : 1, für den zweiten Reaktor ca. 7,3 : 1 und für den dritten Reaktor ca. 6,1 : 1. Es ergibt sich folgende Produktzusammensetzung:

| | |
|---|---|
| 48,14 Gew.-% | Trichlorsilan (TCS) |
| 0,00 Gew.-% | Allylchlorid (ACl) |
| 6,89 Gew.-% | Siliciumtetrachlorid (STC) |
| 7,26 Gew.-% | Propyltrichlorsilan (PTS) |
| 37,71 Gew.-% | 3-Chlorpropyltrichlorsilan (Cl-PTS) |

Somit ergibt sich für die auf die Stoffmengen bezogene Selektivität der Reaktion ein Wert von 4,0 : 1. Dies entspricht einer Ausbeute von 3-Chlorpropyltrichlorsilan, bezogen auf Allylchlorid von 80 %.

**Beispiel 10**

Analog zu Beispiel 9 mit den Unterschieden, dass Reaktoren mit einem Volumen von je 0,8 1 eingesetzt werden und dass das molare Verhältnis von Trichlorsilan zu Allylchlorid 3,4 : 1 beträgt. Der grösste Teil des am Ende des dritten Reaktors austretenden Produktgemisches wird durch eine Pumpe zum Eintritt des ersten Reaktors zurückgeführt, dabei wird das Verhältnis des Kreislaufvolumens zum Eduktvolumen auf 10 : 1 eingestellt. Die Massenstrombilanz ergibt für den molaren TCS-Überschuss am Eintritt für den ersten Reaktor ca. 57 : 1, für den zweiten Reaktor ca. 55 : 1 und für den dritten Reaktor ca. 54 : 1. Es ergibt sich folgende Produktzusammensetzung:

| | |
|---|---|
| 57,55 Gew.-% | Trichlorsilan (TCS) |
| 0,16 Gew.-% | Allylchlorid (ACl) |
| 3,77 Gew.-% | Siliciumtetrachlorid (STC) |
| 3,94 Gew.-% | Propyltrichlorsilan (PTS) |
| 34,58 Gew.-% | 3-Chlorpropyltrichlorsilan (Cl-PTS) |

Somit ergibt sich für die auf die Stoffmengen bezogene Selektivität der Reaktion ein Wert von 5,7 : 1. Dies entspricht einer Ausbeute von 3-Chlorpropyltrichlorsilan, bezogen auf Allylchlorid von 85 %.

**Beispiel 11**

Analog zu Beispiel 7 mit den Unterschieden, dass das molare Verhältnis von Trichlorsilan zu Allylchlorid 3,4 : 1 beträgt und dass der grösste Teil des am Ende des zweiten Reaktors austretenden Produktgemisches durch eine Pumpe zum Eintritt des ersten Reaktors zurückgeführt wird. Dabei wird das Verhältnis des Kreislaufvolumens zum Eduktvolumen auf 10 : 1 eingestellt. Die Massenstrombilanz ergibt für den molaren TCS-Überschuss am Eintritt für den ersten Reaktor ca. 23 : 1. Es ergibt sich folgende Produktzusammensetzung:

| | |
|---|---|
| 56,79 Gew.-% | Trichlorsilan (TCS) |
| 0,03 Gew.-% | Allylchlorid (ACl) |
| 4,42 Gew.-% | Siliciumtetrachlorid (STC) |
| 4,62 Gew.-% | Propyltrichlorsilan (PTS) |
| 34,14 Gew.-% | 3-Chlorpropyltrichlorsilan (Cl-PTS) |

Somit ergibt sich für die auf die Stoffmengen bezogene Selektivität der Reaktion ein Wert von 5,1 : 1. Dies entspricht einer Ausbeute von 3-Chlorpropyltrichlorsilan, bezogen auf Allylchlorid von 84 %.

**Beispiel 12**

Analog zu Beispiel 4 mit dem Unterschied, dass das Reaktorvolumen 4 m$^3$ beträgt. Das molare Verhältnis von Trichlorsilan zu Allylchlorid beträgt 1,8 : 1 und 1180 1 des Gemisches werden zudosiert. Das Verhältnis des Kreislaufvolumens zum Eduktvolumen wird dabei auf 5,5 : 1 eingestellt. Die Massenstrombilanz ergibt für den molaren TCS-Überschuss am Eintritt des Reaktors ca. 4,5 : 1. Es ergibt sich folgende Produktzusammensetzung:

| | |
|---|---|
| 26,15 Gew.-% | Trichlorsilan (TCS) |
| 0,11 Gew.-% | Allylchlorid (ACl) |
| 11,13 Gew.-% | Siliciumtetrachlorid (STC) |
| 11,63 Gew.-% | Propyltrichlorsilan (PTS) |
| 50,98 Gew.-% | 3-Chlorpropyltrichlorsilan (Cl-PTS) |

Somit ergibt sich für die auf die Stoffmengen bezogene Selektivität der Reaktion ein Wert von 3,5 : 1. Dies entspricht einer Ausbeute von 3-Chlorpropyltrichlorsilan, bezogen auf Allylchlorid von 78 %.

**Beispiel 13**

Analog zu Beispiel 8 mit den Unterschieden, dass das molare Verhältnis von Trichlorsilan zu Allylchlorid 2,0 : 1 beträgt und der grösste Teil des am Ende des zweiten Reaktors austretenden Produktgemisches durch eine Pumpe zum Eintritt des ersten Reaktors zurückgeführt wird. Dabei wird das Verhältnis des Kreislaufvolumens zum Eduktvolumen auf 11,5 : 1 eingestellt. Die Massenstrombilanz ergibt für den molaren TCS-Überschuss am Eintritt für den ersten Reaktor ca. 21 : 1 und für den zweiten Reaktor ca. 20 : 1. Es ergibt sich folgende Produktzusammensetzung:

| | |
|---|---|
| 33,27 Gew.-% | Trichlorsilan (TCS) |
| 0,09 Gew.-% | Allylchlorid (ACl) |
| 7,30 Gew.-% | Siliciumtetrachlorid (STC) |
| 7,62 Gew.-% | Propyltrichlorsilan (PTS) |
| 51,72 Gew.-% | 3-Chlorpropyltrichlorsilan (Cl-PTS) |

Somit ergibt sich für die auf die Stoffmengen bezogene Selektivität der Reaktion ein Wert von 4,8 : 1. Dies entspricht einer Ausbeute von 3-Chlorpropyltrichlorsilan, bezogen auf Allylchlorid von 83 %.

**Patentansprüche**

1. Verfahren zur Herstellung von 3-funktionalisierten Propylsilanen durch Addition von Allylverbindungen der allgemeinen Formel I

$$H_2C=CH - CH_2X \qquad\qquad (I),$$

   wobei X Cl, Br, I, F, CN, SCN, SH, SR, OH, $NRR^1$ und OR sein kann und R und $R^1$, beide unabhängig voneinander, $(C_1 - C_6)$Alkyl oder $(C_3 - C_7)$Alkyl bedeuten, an Silane der Formel II

$$R^2R^3R^4SiH \qquad\qquad (II)$$

   wobei $R^2$, $R^3$, $R^4$, alle unabhängig voneinander, Wasserstoff, Halogen, $(C_1 - C_6)$ Alkyl, $(C_1 - C_6)$Haloalkyl, $(C_3 - C_6)$Allyl, $(C_1 - C_4)$Alkoxy, Phenyl, Aryl oder Aralkyl bedeuten können, bei Reaktionstemperaturen zwischen 0 °C und 200 °C und Drücken zwischen 800 mbar und 25 bar und in Gegenwart eines Platinkatalysators, **dadurch gekennzeichnet, daß** man das eingesetzte Silan (II) in 15- bis 100-fachem molaren Überschuß, bezogen auf die Propenverbindung (I), mit dem Katalysator in Kontakt bringt.

2. Verfahren nach Anspruch 1, **dadurch gekennzeichnet, daß** man als Silan der Formel II Trichlorsilan, Methylhydrogendichlorsilan, Ethylhydrogendichlorsilan, Propylhydrogendichlorsilan oder Dimethylhydrogenchlorsilan verwendet.

3. Verfahren nach Anspruch 1, **dadurch gekennzeichnet, daß** man die Additionsreaktion in einem diskontinuierlich betriebenen Rührkessel durchführt.

4. Verfahren nach Anspruch 1, **dadurch gekennzeichnet, daß** man die Additionsreaktion in einem kontinuierlich betriebenen, mit Katalysator gefüllten Rohrreaktor durchführt.

5. Verfahren nach Anspruch 1, **dadurch gekennzeichnet, daß** man den Überschuß an Komponente (II) am Katalysator direkt durch Mischen der Komponenten (I) und (II) einstellt.

6. Verfahren nach Anspruch 1, **dadurch gekennzeichnet, daß** man den Überschuß an Komponente (II) am Katalysator durch die Rückführung des größten Teils des austretenden Produktgemisches zum Kopf eines kontinuierlich betriebenen Rohrreaktors erzeugt.

7. Verfahren nach Anspruch 1, **dadurch gekennzeichnet, daß** man den Überschuß an Komponente (II) am Katalysator dadurch erreicht, daß man eine Kaskade von mindestens zwei Rohrreaktoren verwendet, wobei man die Komponente (I) jeweils zwischen den Reaktoren in anteiligen Mengen nachdosiert und im jeweils nachfolgenden Reaktor abreagiert.

8. Verfahren nach Anspruch 1, **dadurch gekennzeichnet, daß** man einen einzigen Rohrreaktor verwendet, wobei die Nachdosierung der Unterschußkomponente (I) durch eine bis zu neun seitlich am Reaktor angebrachte Rohrleitungen erfolgt.

9. Verfahren nach Anspruch 1, **dadurch gekennzeichnet, daß** man Kombinationen der in voranstehenden Ansprüchen bschriebenen Verfahrensweisen benutzt.

10. Verfahren nach Anspruch 1, **dadurch gekennzeichnet, daß** man die Katalysatorkonzentration zwischen 0,1 und 10000 ppm bezogen auf die Allylverbindung, einstellt.

11. Verfahren nach Anspruch 1, **dadurch gekennzeichnet, daß** man die Umsetzung bei Drücken zwischen 800 mbar bis 10 bar durchführt.

## Claims

1. Process for the production of 3-functionalised propyl silanes by addition of allyl compounds of general formula I

$$H_2C=CH - CH_2X \qquad (I),$$

wherein X can be Cl, Br, I, F, CN, SCN, SH, SR, OH, $NRR^1$ and OR and R and $R^1$, both independently of each other, mean $(C_1 - C_6)$ alkyl or $(C_3 - C_7)$alkyl, to silanes of formula II

$$R^2R^3R^4SiH \qquad (II)$$

wherein $R^2$, $R^3$, $R^4$, all independently of each other, can mean hydrogen, halogen, $(C_1 - C_6)$alkyl, $(C_1 - C_6)$haloalkyl, $(C_3 - C_6)$allyl, $(C_1 - C_4)$alkoxy, phenyl, aryl or aralkyl, at reaction temperatures of 0°C to 200°C and pressures of 800 mbar to 25 bar and in the presence of a platinum catalyst, **characterised in that** the silane (II) used is brought into contact with the catalyst in a 15- to 100- fold molar excess in relation to the propene compound (I).

2. Process according to claim 1, **characterised in that** trichlorosilane, methylhydrogen dichlorosilane, ethylhydrogen dichlorosilane, propylhydrogen dichlorosilane or dimethylhydrogen chlorosilane is used as the silane of formula II.

3. Process according to claim 1, **characterised in that** the addition reaction is carried out in a discontinuously operated stirred tank.

4. Process according to claim 1, **characterised in that** the addition reaction is carried out in a continuously operated tube reactor filled with catalyst.

5. Process according to claim 1, **characterised in that** the excess of component (II) on the catalyst is set directly by mixing component (I) and component (II).

6. Process according to claim 1, **characterised in that** the excess of component (II) on the catalyst is produced by re-circulating the majority of the product mixture discharged to the top of a continuously operated tube reactor.

7. Process according to claim 1, **characterised in that** the excess of component (II) on the catalyst is achieved by using a cascade of at least two tube reactors, dosing proportionate quantities of component (I) between the reactors in each case and reacting it in the following reactor in each case.

8. Process according to claim 1, **characterised in that** a single tube reactor is used, the deficit component (I) being dosed subsequently through up to nine tubes fitted to the side of the reactor.

**9.** Process according to claim 1, **characterised in that** combinations of the methods disclosed in the previous claims are used.

**10.** Process according to claim 1, **characterised in that** the catalyst concentration is set at 0.1 to 10000 ppm in relation to the allyl compound.

**11.** Process according to claim 1, **characterised in that** the reaction is carried out at pressures of 800 mbar to 10 bar.

**Revendications**

**1.** Procédé pour la préparation de propylsilanes fonctionnalisés en position 3 par addition de composés allyliques répondant à la formulé génèrale (I)

$$H_2C=CH - CH_2X \qquad (I)$$

dans laquelle

X peut représenter Cl, Br, I, F, CN, SCN, SH, SR. OH, $NRR^1$ et OR et R et $R^1$ représentent, tous deux indépendamment l'un de l'autre, un groupe alkyle en $(C_1-C_6)$ ou akyle (en $C_3-C_7$), à des silanes répondant à la formule II

$$R^2R^3R^4SiH \qquad (II)$$

dans laquelle $R^2$, $R^3$, $R^4$ peuvent tous représenter, indépendamment les uns des autres, un atome d'hydrogène, un atome d'halogène, un groupe alkyle (en $C_1-C_6$), haloalkyle (en $C_1-C_6$), allyle (en $C_3-C_6$), alcoxy (en $C_1-C_4$), phényle, aryle ou aralkyle, à des températures de réaction se situant entre 0°C et 200°C et sous des pressions se situant entre 800 mbars et 25 bars et en présence d'un catalyseur au platine, **caractérisé en ce que** l'on met en contact le silane mis en oeuvre (II) en excès 15 à 100 fois molaire, par rapport au composé propène (I), avec le catalyseur.

**2.** Procédé selon la revendication 1,
**caractérisé en ce que**
comme silane répondant à la formule II, on utilise le trichlorosilane, le méthylhydrogénodichlorosilane, l'éthylhydrogénodichlorosilane, le propylhydrogénodichlorosilane ou le diméthylhydrogénochlorosllane.

**3.** Procédé selon la revendication 1,
**caractérisé en ce que**
l'on effectue la réaction d'addition dans un appareil muni d'un agitateur fonctionnant en discontinu.

**4.** Procédé selon la revendication 1,
**caractérisé en ce que**
l'on effectue la réaction d'addition dans un réacteur tubulaire rempli de catalyseur fonctionnant en continu.

**5.** Procédé selon la revendication 1,
**caractérisé en ce que**
l'on ajuste l'excès de composant (II) sur le catalyseur directement par mélange des composants (I) et (II).

**6.** Procédé selon la revendication 1,
**caractérisé en ce que**
l'on produit l'excès de composant (II) sur le catalyseur par renvoi de la plus grande partie du mélange de produits sortant en tête d'un réacteur tubulaire fonctionnant en continu.

**7.** Procédé selon la revendication 1,
**caractérisé en ce que**
l'on atteint l'excès de composant (II) sur le catalyser en utilisant une cascade d'au moins deux réacteurs tubulaires et en introduisant le complément de composant (I) à chaque fois entre les réacteurs en quantités partielles, la réaction ayant lieu à chaque fois dans le réacteur suivant.

8.  Procédé selon la revendication 1,
    **caractérisé en ce que**
    l'on utilise un réacteur tubulaire unique, le complément au composant (I) en déficit étant introduit au moyen de une à neuf tuyauterie(s) disposée(s) latéralement au réacteur.

9.  Procédé selon la revendication 1,
    **caractérisé en ce que**
    l'on utilise des combinaisons des modes opératoires décrits dans les revendications précédentes.

10. Procédé selon la revendication 1,
    **caractérisé en ce que**
    l'on ajuste la concentration de catalyseur entre 0,1 et 10000 ppm par rapport au composé allyle.

11. Procédé selon la revendication 1,
    **caractérisé en ce que**
    l'on effectue la réaction sous des pressions se situant entre 800 mbars et 10 bars.

H-Silan (Ü.) +
Allylkomponente

Allylkomponente

n=1-9

*Fig. 1*

Produktgemisch

H-Silan (Ü.) +
Allylkomponente

Allylkomponente

Allylkomponente
n=1-9

Produktgemisch

*Fig. 2*

H-Silan +
Allylkomponente

Produktgemisch

*Fig. 3*